# EUROPEAN PATENT APPLICATION

(11) **EP 1 081 892 A2**
(43) Date of publication of application: **07.03.2001**
(21) Application number: 00202510.4
(22) Date of filing: 14.07.2000
(51) Int. Cl.: H04L 12/14

(54) **Network Accounting System**

(30) Priority: 16.07.1999 US 144543 P; 12.08.1999 US 373088
(71) Applicant: Nortel Networks Limited, Montreal, Quebec H2Y 3Y4 (CA)
(72) Inventor: Travostino, Franco, Arlington, Massachusetts 02474 (US)
(74) Representative: Brophy, David

(57) **Abstract**

An accounting architecture is described. The accounting architecture includes a client process executing on at least one network device in a network. The client process processes accounting records and performs functions on the accounting records to obtain useful information from the accounting records. The accounting architecture also includes a server process that downloads functions to the client process.

## Description

### BACKGROUND

This invention relates to network accounting systems that collect information concerning usage of computer networks.

Network accounting systems are used to collect information about network traffic flow. These systems are designed to classify network traffic according to pre-defined metrics (e.g., source, number of packets, number of bytes, and so forth) and delivering the data to an accounting server running applications such as a billing application. In general, accounting servers embody all the processing required to go from raw traffic data to a final invoice. Accounting servers include various aggregation and correlation functions, as well as mechanisms to guarantee the integrity of transactions after crashes. The most advanced IP accounting services export APIs to customize the processing of accounting data. In traditional Internet Protocol (IP) accounting, raw traffic reports are moved from accounting-illiterate edge network nodes to centralized accounting servers that execute accounting applications e.g., billing applications. The servers operate on the accounting data off-line and transform traffic reports into invoices or other types of reports. Increasingly, the effectiveness and efficiency of traditional IP Accounting are threatened by the exponential growth in network traffic and the concomitant increase in data volume.

### SUMMARY

According to an aspect of the present invention, an accounting architecture includes a client process executing on at least one network device in a network, the client process processing accounting records and performing functions on the accounting records to obtain useful information from the accounting records and a server process that downloads functions to the client process.

According to an additional aspect of the present invention, a client accounting process includes a common layer that provides standard interfaces and at least one plug-in module that specifies an accounting function to be performed by the client process.

According to a still further aspect of the present invention, a server accounting process includes a device run time layer, a platform independent layer, and an interface that couples the device run time layer to the platform independent layer. The server process also includes a common layer including a plurality of server plug-in modules at least one of which communicates with a corresponding client plug-in module in a client process.

One or more of the following advantages may be provided by one or more aspects of the invention.

The system provides resident intelligence at network nodes that improves communication between the network nodes and the accounting server. The arrangement can operate to provide real time management information pertaining to IP accounting. The architecture is arranged to push down to network nodes some of the actual work that an accounting server performs such that the nodes can make first level type of decisions and transmit resulting information to the server.

This architecture can separate high-value, high pay-off traffic from low-cost, low-value traffic that can coexist within the same commodity network infrastructure and thus devote more resources to deal with the high value traffic. The architecture can implement Quality of Service classes for tariffs, which can include, for instance, real-time billing to selected customers. It can promote adaptive pricing schema designed to improve resource utilization (as opposed to flat administrative agreements among providers). This architecture will enable service providers to customize a set of billable resources for communication and computation .

This architecture minimizes data flow to the server. The accounting software on the node can communicate with the server to indicate when the node is at capacity, or change the manner of billing based on the capacity of the node. For example, the accounting software can adjust the price for using the network that it monitors based on current demand for the node. This architecture enables more decision making to occur in real time rather than as a batch process and can lead to better utilization of network resources.

### BRIEF DESCRIPTION OF THE DRAWINGS

FIG. 1 is a block diagram showing networks and routers in an arrangement for an IP accounting architecture
FIG. 2 is a block diagram of a client process.
FIG. 3 is a block diagram of a server process.

### DESCRIPTION

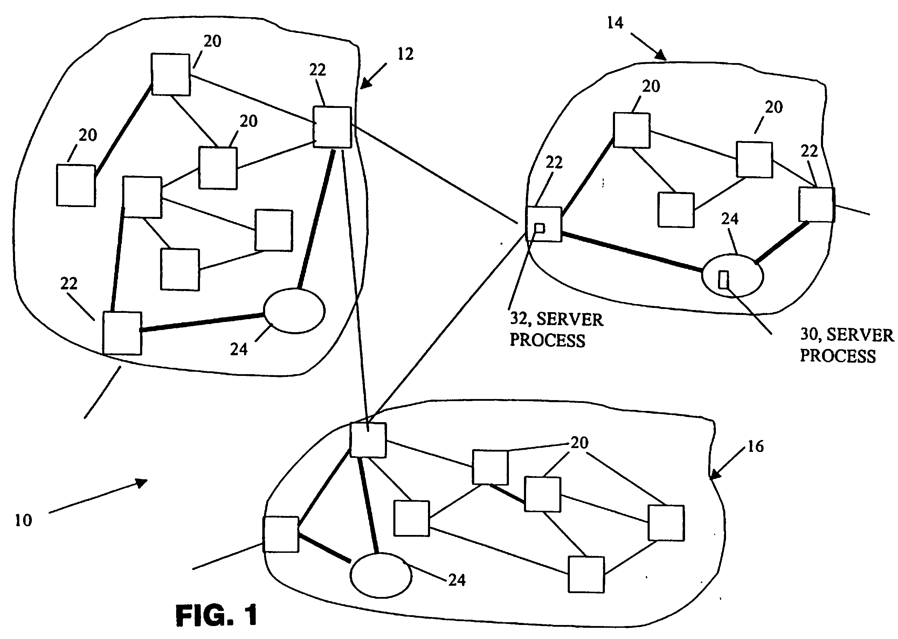

Referring now to FIG. 1, a network arrangement 10 is shown. The network arrangement 10 includes a series of networks 12, 14, and 16. The networks include network devices 20 such as routers and edge routers 22. Each of the networks 12, 14, and 16 include an accounting server 24 that administers accounting functions for the respective network 12, 14, and 16. Each of the accounting servers 24 can execute an accounting server process 30. The accounting server process 30 communicates with distributed client processes 32 that reside on network devices 20, preferably edge routers 22 in the networks 12, 14 and 16. The accounting server 24 receives information from the client processes 32 on the devices 24.

The accounting server 24 is responsible for processing accounting records from a large plurality of network devices 20, e.g., routers and other devices. Although any of the routers can run a client accounting process 32, the so called edge routers, e.g., router 22 are preferred devices to run the client process 32. Edge routers 22 are routers or access nodes positioned at the junction of two or more network clouds belonging to different administrative domains. The accounting server process 30 collects data from these distributed client processes 32. The distributed client processes 32 that reside on the edge routers 20' can be changed by the server 30 based upon various considerations such as traffic, customer needs end so forth. Thus, the server can add or withdraw functions from the network devices based on requirements fed to the accounting server.

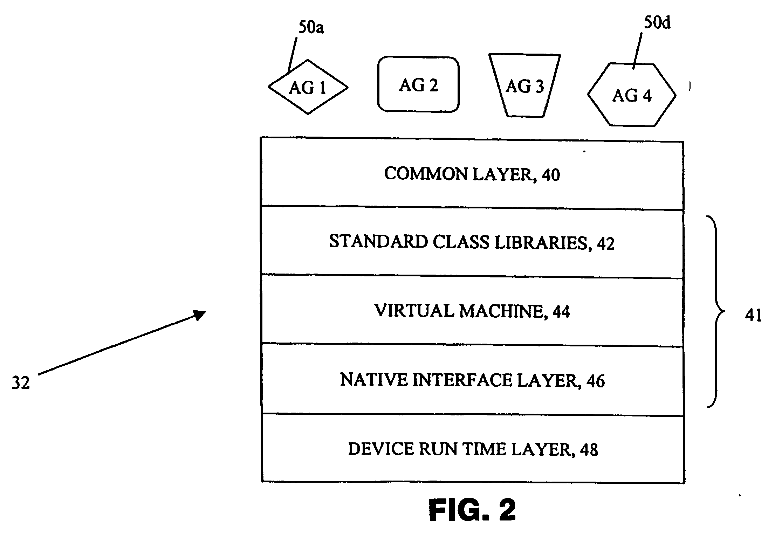

Referring now to FIG. 2, an architecture of the client process 32 that can reside on network devices 20 such as the edge routers 22 is shown. The client process resides on a computer readable medium, e.g., disk either optical or magnetic, and is executed in memory. Other implementations are possible. The client process 32 includes a common layer 40 that provides custom application program interfaces, security and management functions. The client process 32 also includes plug-in modules 50a-50d that perform specialized accounting functions on accounting records collected at the node on which the client process 32 runs. The client process 32 includes an interface layer 41 between the common layer 40 and a run time layer 48 of the device that executes the client process. The run time layer includes an operating system, application programs, hardware and so forth. The client process 32 interacts with the run-time layer 48 through the interface 41. One preferred implementation of the interface 41, as well as the client process common layer 40 and plug-in modules 50a-50d, is as a Java® (Sun Microsystems, Inc.) language program.

As a Java® language program the common layer 40 also interfaces with standard Java® class libraries 42, and a Java® virtual machine layer 44. These Java® layers are disposed between the common layer 40 and the device run-time layer 48. Although any language can be used to implement the plug-in modules 50a-50d and common layer 40, Java® or similar platform independent languages are preferred. Java® is a platform independent language that has a feature in which Java® code can run on any platform without the need to recompile the code for the new platform.

The common layer 40 can interface to different plug-in modules e.g., 50a-50d, each of which can perform different accounting functions. The common layer 40 is adapted to handle all data flow and interfacing for the plug-in modules 50a-50d. Each of plug-in modules 50a-50d perform a different process and each can have access to all data in the form of accounting records on the node e.g., edge router 20'. Depending on the tasks that the server desires client to perform at the nodes e.g., edge routers 20' or other routers 20, different ones of the plug-in modules 50a-50d will be sent or activated.

The plug-in modules 50a-50d can perform various functions such as compression type of functions, real time signaling, real time debit card debiting or calculation of toll free type of traffic. For example, an Internet service provider (ISP) may have a customer who requires real-time billing. The ISP may administer the networks 12, 14 and 16 and use the server 30 for billing. The server in response to this customer requirement passes a plug-in module into a network node e.g., router 20' that performs real time billing for that customer.

With this type of an architecture, the client code is flexible and the relationship of functions that occur in the server process 30 and client processes 32 can dynamically change based on new needs or requirements. Considerations include the nature of and requirements of a customer, what type of service the customer pays for, current network traffic loads, and so forth. The server process 30 can determine a defined order in which to execute the plug-in modules 50a-50d to produce a compounded result.

The client nodes e.g., edge routers 22 receive network packets and produce accounting records. One preferred type of accounting record is a network accounting record (NAR), as described in pending US patent application Serial No.09/276,307 entitled ^{"}NETWORK ACCOUNTING RECORDS"', assigned to the assignee of the present invention and incorporated herein by reference.

As described in the above application, a data collector 21 residing on the node 22 translates collected information into network accounting records (NARs). A NAR includes a header, an accounting entity identifier and metrics. The network accounting record (NAR) is a normalized data record that contains information about a user's network usage activity. A base level "activity" NAR can include source, destination, protocol, source port, destination port, byte and packet counts, etc. The base level activity NAR can be combined and aggregated to support various accounting functions. The NAR can be aggregated to identify source of the NAR and so forth, as described in the above application. The NAR is an activity record corresponding to some level of detail. Detail can vary based on the level of aggregation being applied, in accordance with the needs of the end-user/application.

The common layer 40 having the plug-in modules 50a-50d receives accounting records processed on the nodes as inputs, and processes those accounting records and outputs reports, accounting records or actions depending on the function assigned to the plug-in module. The plug-in modules 50a-50d return fewer accounting records to the server process 30 and can produce real-time reports or calculations. Indeed, in some instances the plug-in module can produce accounting records that are sent directly to a different destination e.g., a customer without first being processed by the server 18. The output could be different types of accounting records or other types of information such as status or an answer to a particular query that is specified by one of these plug-ins.

For example, a plug-in module can implement real-time settlements. In that case, such a plug-in module would examine accounting records produced by the node. The plug-in module recognizes that a particular accounting record needs to be forwarded to a long distance phone carrier because that carrier is the carrier for which there was a settlement. With this accounting architecture the network record can be sent directly to the carrier without going first through the server.

A different plug-in module can perform toll-free call management. The toll-free plug-in module can examine the accounting records and for the records that correspond to the toll-free call, the module can delete them or not forward them to the server since those accounting records do not result in billable network activity.

A plug-in module can provide real-time signaling where a node may have accounting records for which real-time invoicing is required. The plug-in module can find those records and arrange to send those records, as soon as possible to the accounting server so the accounting server can notify the customer of network charges in real-time.

In general, many of the plug-in modules 50a-50d are small specialized programs that execute a small instruction set repetitively over a large data set. For example, some of the plug-in modules can execute compare and move instructions on a data set of accounting records. For real time billing, the plug in module can compare metrics in the accounting records to predefined metrics corresponding to a customer who desires real-time billing. Those records can be moved to a storage location corresponding to the customer aggregated, enhanced and send immediately to the server for real-time billing. In some instances the records can be sent directly to the customer.

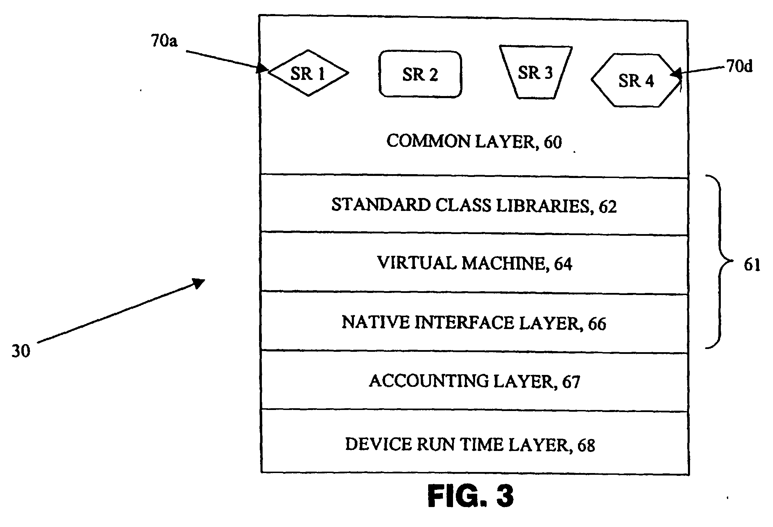

Referring now to FIG. 3, the architecture for the server process 30 is shown. The server process 30 executes on an accounting server 18 typically in an off-line mode. The server process resides on a computer readable medium, e.g., disk, either optical or magnetic, and is executed in memory. Other implementations are possible. The server process 30 includes a common layer 60 and the server side plug-in module interfaces 70a-70d that implement the server architecture accounting functions. The server process 30 also includes an interface layer 61 and a run time layer 68. The server process 30 can also have other layers such as an accounting application layer 67 that maintains an aggregation layer, correlation layer, and so forth. The accounting architecture 10 can be used with legacy accounting packages e.g., layer 67 that may have correlation and aggregation built in. In some legacy applications it may not be possible to implement the clients 50a-50d. Accordingly, the IP accounting server 18 may need to deal with both types of clients.

As with the client process 32, the server process 30 is implemented in a platform independent language such as Java®. As a Java® language program the common layer 60 also interfaces with standard Java® class libraries 62, and a Java® virtual machine layer 64. These Java® layers are disposed between the common layer 60 and the device run-time layer 68 that includes an operating system, hardware, are so forth. Although any language can be used to implement the pluq-in modules 70a-70d and server side common layer 60, Java® or similar platform independent languages are preferred, for the reasons mentioned above.

The server 30 has capabilities for controlling the client process 32. Depending on the type of accounting server 18, the server process would also include code to install a client process 32 into an existing node. For example, assume that a customer desires real time billing. That information is communicated to the accounting server e.g, through a server administrator interface that a customer "〈names〉" requires real time billing. Upon receiving that Information, the accounting server process 30 deploys the client process 32 including the common layer 40, interface 41 and deploys one or more plug-in modules 50a-50d to actually perform the real time transfer of the accounting records e.g., to the customer. The client process is deployed into one or several nodes in a network. The server process 30 thus pushes a real-time plug-in module e.g., 70a, to perform a real-time billing function out into various nodes. The server process 30 activates one of the server plug-in modules 70a-70d corresponding to the client plug-in module 50a to process the accounting records sent from the plug-in module 50a in real time on the server 18. For some of the modules, both client and server code runs concurrently.

Some of the features of the architecture are driven by customers and some features are not visible to customers. For example, certain features are provided to improve communication between the node and the accounting server 18. The plug-in modules 70a-70d of the server process 30 are designed to respond to the client plug-in modules 50a-50d.

In some applications, the server process 30 receives input from the customer based on parameters that the customer specifies. The server common layer 60 configures the server plug-in modules 70a-70d with the customer information. The plug-in modules 70a-70d can be reachable through a graphical user interface. The server plug-in modules 70a-70d through the common layer 60 communicate with the equivalent plug-in modules 50a-50d in the client process 32. Preferably, a specific server plug-in module 70a-70d communicates with a corresponding, client plug-in module 50a-50d. The client process can be configured with all of the plug-in modules 50a-50d pra-loaded or alternatively, the server process 30 can transmit required plug-in modules 50a-50d to the client process 32 on an "as needed" basis.

The plug-in modules 70a-70d on the server are complementary to the plug-in modules on the nodes. The server and client modules communicate with each other but have different functions. The plug-in modules 70a-70d on the server process 30 typically start processing by pushing or activating a client plug-in module 50a-50d on a node. The server plug-in module 70a-70d is the interface for the client plug-in module 50a-50d to the underlying accounting application. The accounting application associated with the server has the capability to enhance and aggregate accounting records.

Several examples of the types of functions that can be implemented with this accounting architecture follow:

A first example is a network administration implementation of the so called "one dollar accounting rule." In general financial accounting, there is a rule that if an income stream is small, e.g. less than one dollar, an organization should not waste the time and expense to account far the income stream. In some network flows there can be situations where a number of aggregated low value flows do not add up to meaningful billable traffic. This accounting architecture 10 can use a plug-in module to bin i.e. find and move those accounting records to a special storage. That is, the architecture 10 can apply rules to that low value flow that permit records corresponding to the low value flows to be handled in a less precise and less costly manner. Unless the low value flows increases in value, the architecture 10 can be progressively less precise about the records corresponding to the low value flows till the low value flows are treated as noise. At any point in time, traffic may start picking up and those records can be stored with good records. When a client process 32 communicates with the accounting server 18, the client process 32 can be configured transfer to the server process 30 only the good accounting records, i.e., the records that produce meaningful traffic. The client process 32 can retain the low value records or transfer them at infrequent intervals. This spares resources at the accounting server 18 while permitting the accounting architecture to charge for the marginal traffic.

The architecture 10 prioritizes accounting records from those that are the most important financially to the ones that are the least important financially. In this example, the communication between the plug-in module on the node and the plug-in module on the server is that plug-in module at the node knows how to distinguish between the noise records and the good records and will only send to the plug-in module of the server the good records, except once every e.g., 10 times when it sends all the records. This communication between the plug-in module of the node and the plug-in module of the server would not be visible to the customer because this is an optimization that is not specific to any particular customer. Rather, this communication is an infrastructure optimization.

A second example is fraud exposure. With fraud exposure, the plug-in module can detect that a node has not had any significant traffic in the last six months. If the plug-in module all of a sudden detects that the node is using all available resources it can signal that it has detected a suspected fraud. That is, the plug-in module can discover that there is a discrepancy can notify the accounting server immediately of an unusual condition.

A third example, is the accounting process for a prepaid debit card. With the prepaid debit card, the accounting server will send a plug-in module to the client. The plug-in module decrements an account corresponding to the prepaid debit card. The accounting server 18 configures the plug-in module of the client with an amount of money. The server 18 relinquishes control of the process to the client that decrements the account for each use and stops delivering on the debit card once the card has been exhausted.

The architecture 10 offers effectiveness improvements to services provided by providing real-time billing to selected customers. The architecture 10 can improved various efficiencies. For example, the architecture can achieve a reduction on accounting application's wire traffic at the expenses of more CPU cycles being invested in data reduction. The architecture 10 allows effectiveness-to-efficiency tradeoffs (e.g., manage accounting data overflows by considering financial implications of data drops).

The client plug-in modules 50a-50d place the accounting server 18 where raw accounting data is being collected and first classified. Thus, this architecture can perform custom functions on accounting records on behalf of the accounting server. The accounting software can be statically or dynamically linked to the network node's bootable image.

The following examples present additional opportunities for device-resident accounting software. The modules can be developed to pre-aggregate and pre-correlate accounting data, arid expedite and volunteer accounting data pertaining to flows with real-time billing enabled. Therefore, as mentioned above, the plug-in modules can process accounting semantics such as pre-paid debit card and toll-free flows. The process can recognize company settlements and dispatch data accordingly. The process can apply specific rules e.g., the one dollar (1$) accounting rule mentioned above to IP accounting. The process can extend the set of billable monitored resources and can have modules designed to detect and minimize fraud exposure with "fraud suspecter modules" being remotely and dynamically tuned by the accounting server 18, as also mentioned above.

Plug-in modules can be developed to provide stochastic flow sampling algorithms, tuned to sample according to feedback metrics supplied by the accounting server. The plug-in modules can enable real-time trend analysis by establishing dynamic, statistically-relevant probes. The modules can enable a bid process, i.e., a network administrator based on reports provided by the plug-in modules can make available on a temporary basis unused resources of a device at a bargain pricing. The plug-in modules can also be deployed to secure confidentiality of some accounting records. This can be accomplished by developing modules that can selectively/adaptively encrypting such records.

### Other Embodiments

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. An accounting architecture comprising:
a client process disposed on at least one network device in a network, the client process disposed to process accounting records and perform functions on the accounting records to obtain useful information from the accounting records; and
a server process that downloads functions to the client process.

2. The architecture of claim 1 wherein the client process determines what flows are important to monitor in order to satisfy customer requirements.

3. The architecture of claim 1 wherein the client process that executes at the device can be dynamically changed based on requirements provided to the server process.

4. The architecture of claim 1 wherein the network devices having the client process are edge network routers.

5. The architecture of claim 1 wherein the client process includes at least one plug-in module which communicates with at least one corresponding plug-in module on the server process.

6. The architecture of claim 1 wherein the client process is disposed on an edge router in the network and the client process comprises:
a device run time layer;
a platform independent layer;
an interface that couples the device run time layer to a platform independent layer; and
a common layer that communicates with server plug-in modules.

7. The architecture of claim 6 further comprising:
at least one server plug-in module that communicates with the common layer and at least one plug-in module on the client process.

8. The architecture of claim 6 wherein the plug-in modules perform real-time billing, fraud detection, stochastic flow sampling, bid processing, debit card or toll-free call monitoring, and real-time settlement.

9. The architecture of claim 6 wherein the server includes:
a run time layer;
an interface layer; and
a common layer.

10. The architecture of claim 9 further comprising an accounting application in communication with the server.

11. A client accounting process comprising :
a common layer that provides standard interfaces; and
at least one plug-in module that specifies an accounting function to be performed by the client process.

12. The client accounting process of claim 11 further comprising:
a device run time layer;
a platform independent layer;
an interface that couples the device run time layer to the platform independent layer so that the common layer communicates with the at least one plug-in module and the device run time layer through the interface layer.

13. The client process of claim 11 wherein the at least one plug-in module communicates with at least one plug-in module on a server process.

14. The client process of claim 11, or the architecture of claim 6, wherein the common layer comprises:
custom management, custom security and custom application program interfaces.

15. The client process of claim 11, or the architecture of claim 5, wherein the plug-in module debits a prepaid debit card, said plug-in module comprising instructions for causing the client process to:
decrement an account corresponding to the prepaid debit card; and
determine when the card had been exhausted to stop delivery of service to the card.

16. The client process of claim 11, or the architecture of claim 5, wherein the plug-in module detects suspected frauds, said plug-in module comprising instructions for causing the client process to:
determine whether a node has a sudden change in use of available resources; and if a sudden change was detected,
signal the server that a suspected fraud was detected.

17. the client process if claim 11, or the architecture of claim 5, wherein the plug-in module accounts for traffic flow, said plug-in module comprising instructions for causing the client process to:
determine whether a number of aggregated low value flows add up to meaningful billable traffic; and

18. The client process or the architecture of claim 17, said plug-in module further comprising instructions for causing the client process to :
determine if low value flows increases in value, and if so,
transfer the low value flows to the server process.

19. The client process of claim 11, or the architecture of claim 5, wherein the plug-in module implements real-time settlements, said plug-in module comprising instructions for causing the client process to:
examine accounting records produced by the node; and
determine whether a particular accounting record needs to be forwarded to a long distance phone carrier because that carrier is the carrier for which there was a settlement.

20. The client process of claim 11, or the architecture of claim 5, wherein the plug-in module implements real-time billing, said plug-in module comprising instructions for causing the client process to:
compare metrics in accounting records to predefined metrics corresponding to a customer who desires real-time billing; and
send the records for real-time billing.

21. The client process or the architecture of claim 20 wherein said plug-in module further comprises instructions for causing the client process to:
aggregate and enhance the records corresponding to a customer prior to sending.

22. The client process or the architecture of claim 20 wherein said plug-in module further comprises instructions for causing the client process to:
send the records directly to the customer.

23. A server accounting process, comprising:
a device run time layer;
a platform independent layer;
an interface that couples the device run time layer to the platform independent layer; and
a common layer including a plurality of server plug-in modules at least one of which communicates with a corresponding client plug-in module in a client process.
